## Europäisches Patentamt
## European Patent Office
## Office européen des brevets

(19)

(11) Veröffentlichungsnummer: **0 027 241**
**B1**

(12)

# EUROPÄISCHE PATENTSCHRIFT

(45) Veröffentlichungstag der Patentschrift:
07.07.82

(21) Anmeldenummer: 80106071.6

(22) Anmeldetag: 07.10.80

(51) Int. Cl.³: **F 16 M 11/26**, F 16 B 7/14

(54) Teleskopisch verstellbare Stütze, insbesondere für ein Kamerastativ.

(30) Priorität: 13.10.79 DE 2941537

(43) Veröffentlichungstag der Anmeldung:
22.04.81 Patentblatt 81/16

(45) Bekanntmachung des Hinweises auf die Patenterteilung:
07.07.82 Patentblatt 82/27

(84) Benannte Vertragsstaaten:
AT BE CH FR GB IT LI NL SE

(56) Entgegenhaltungen:
DE-A-2 617 313
FR-A-1 546 856
FR-A-1 581 766
GB-A-594 482

(73) Patentinhaber: CULLMANN
HANDELSGESELLLSCHAFT FÜR VERBRAUCHSGÜTER
M.B.H., Waldstrasse 12, D-8506 Langenzenn-Laubendorf
(DE)

(72) Erfinder: Groschupp, Dieter, Hardgraben 4,
D-8506 Langenzenn (DE)

(74) Vertreter: LOUIS, PÖHLAU, LOHRENTZ & SEGETH,
Kesslerplatz 1, D-8500 Nürnberg (DE)

Teleskopisch verstellbare Stütze, insbesondere für ein Kamerastativ

Die Erfindung geht aus von einer Stütze der im Oberbegriff des Anspruchs 1 angegebenen und durch die DE-A 2617313 bekanntgewordenen Art.

Bei dieser Anordnung, bei der die Profile der Rohre der Manschette, des Klemmrings und der Mutter naturgemäss allesamt rund sein müssen, wird zum Festklemmen des Innenrohres in einer beliebig weit in das Aussenrohr eingeschobenen Stellung von einer axialen Spannbewegung Gebrauch gemacht, wobei das Innenrohr durch die relativ kurz beabstandeten Schrägflächen an den beiden Enden des Klemmrings geführt und festgeklemmt wird.

Die an der Manschette vorgesehenen und durch die Aussparungen im Aussenrohr greifenden Vorsprünge sind in radialer Richtung kürzer als der Abstand zwischen den Aussenflächen des Aussen- und des Innenrohrs und wirken lediglich als Anschlag für eine am einschubseitigen Ende des Innenrohrs vorgesehene Ringschulter, um ein vollständiges Herausziehen des Innenrohres aus dem Aussenrohr bei gelöster Feststellmutter zu verhindern.

Bei der bekannten teleskopisch verstellbaren Stütze wird es als nachteilig empfunden, dass die Verriegelungseinrichtung aus zwei voneinander getrennten Teilen besteht, die zwei verschiedene Herstellungseinrichtungen erfordern, die Montage erschweren und damit insgesamt im Vergleich zu einer einstückigen Verriegelungsvorrichtung höhere Herstellungskosten verursachen. Da ferner der Klemmring eine gewisse Länge nicht übersteigen soll, ist auch der durch ihn bewirkte Halt des Innenrohres nicht so gross, wie es oftmals wünschenswert wäre. Ein mit solchen Stützen aufgebautes Kamerastativ ist nicht genügend verwacklungssicher. Schliesslich ist nochmals zu erwähnen, dass aufgrund der axialen Spannbewegung nur runde Profile in Frage kommen.

Aus dem DE-U 1774575 ist ein Stativ mit einer zentralen Muffe bekannt, an der einerseits die Stativbeine angelenkt sind und in der andererseits eine Säule höhenverstellbar verschieblich geführt und feststellbar ist. Die Muffe wird dabei unmittelbar mit der Säule verpresst.

In der US-A 2991096 ist eine teleskopisch verstellbare Stütze mit mindestens zwei ineinander schiebbaren Rohren bekannt, wobei bei einer relativen Drehung zwischen Aussen- und Innenrohr eine dazwischenliegende Buchse gespreizt wird, die an einer einzigen Stelle, nämlich an dem in das Aussenrohr eingeschobenen Ende des Innenrohrs, für eine Klemmverbindung zwischen den beiden sorgt. Die Klemmung tritt also nur im Bereich der Buchse auf.

Schliesslich ist aus der FR-A 1581766 eine weitere teleskopisch verstellbare Stütze mit mindestens zwei ineinander schiebbaren Rohren bekannt, bei der die Verklemmung mit Hilfe einer einen Zapfen aufweisenden dazwischenliegenden Buchse und einem am Zapfen angreifenden verschwenkbaren Kurvenring erfolgt, mit dessen Hilfe der Zapfen radial nach innen gedrückt werden kann, so dass es zu einer Verspannung zwischen den Elementen an einer einzigen Stelle, nämlich im Bereich des Zapfens kommt.

Die Aufgabe der Erfindung besteht darin, Stützen der im Oberbegriff des Anspruchs 1 angegebenen Art insoweit zu verbessern, dass bei gleichzeitiger Vereinfachung der Verriegelungseinrichtung der Halt des Innenrohrs am Aussenrohr verbessert und damit die Steifigkeit der Verbindung zwischen beiden Rohren erhöht wird.

Zur Lösung dieser Aufgabe sind bei der Erfindung die im kennzeichnenden Teil des Anspruches 1 angegebenen Gestaltungsmerkmale vorgesehen.

Bei der im kennzeichnenden Teil des Anspruches 1 angegebenen Aufgabenlösung und den Merkmalen der Unteransprüche bestehen Überschneidungen mit dem Stand der Technik.

Im Gegensatz zu der bekannten teleskopisch verstellbaren Stütze besteht also die Verriegelungseinrichtung der erfindungsgemässen Stütze aus einem einzigen Stück, wodurch Herstellung und Montage vereinfacht werden. Ferner wird der Halt des Innenrohrs im Aussenrohr dadurch verbessert, dass das Innenrohr nicht nur über die Länge der Klemmeinrichtung hinweg festgeklemmt, sondern auch an den von der Klemmeinrichtung entfernten, durch die Aussparungen im Aussenrohr greifenden Vorsprünge festgeklemmt wird, so dass die Länge, über die das Innenrohr gehalten wird, wesentlich grösser als bei der bekannten Stütze ist.

Da ferner kein zwischen das Aussen- und das Innenrohr teilweise einzuschiebender Klemmring vorgesehen ist, der eine axiale Spannbewegung erfordert, kann in einer bevorzugten Ausführungsform der Erfindung als Feststelleinrichtung eine Knebelspanneinrichtung verwendet werden, die lediglich radiale Kräfte auf die Verriegelungshülse ausübt. Daher ist die erfindungsgemässe Konstruktion grundsätzlich auch bei unrunden Profilen anwendbar.

Es sei noch erwähnt, dass aufgrund des verbesserten Haltes des Innenrohrs bei der erfindungsgemässen Stütze die Wandstärke der Rohre geringer als bei den bekannten Stützen ausfallen kann. Mit einer Wandstärke von 0,7 mm im Vergleich zu 1,2 mm, wie sie bei den bekannten Stützen in der Regel anzutreffen ist, konnten befriedigende Ergebnisse erzielt werden.

Die Merkmale der Erfindung und deren technische Vorteile ergeben sich auch aus der nachfolgenden Beschreibung eines Ausführungsbeispiels in Verbindung mit den Ansprüchen und der Zeichnung. In der Zeichnung stellen dar:

Fig. 1 eine Draufsicht auf eine entlang der Linie I-I der Fig. 2 teilweise aufgeschnittene teleskopisch verstellbare Stütze

Fig. 2 eine Querschnittsansicht der Stütze in der Ebene II–II der Fig. 1,

Fig. 3 die Verriegelungshülse in einem Längsschnitt in der Ebene III–III der Fig. 4 und 5,

Fig. 4 eine Endansicht der Verriegelungshülse der Fig. 3,

Fig. 5 eine Draufsicht auf die Verriegelungshülse der Fig. 3,

Fig. 6 die Mutter der erfindungsgemässen Stütze teilweise im Längsschnitt und

Fig. 7 das aufschubseitige Ende des Aussenrohres und das einschubseitige Ende des Innenrohrs der erfindungsgemässen Stütze in einer auseinandergezogenen Darstellung ohne Verriegelungshülse und Mutter.

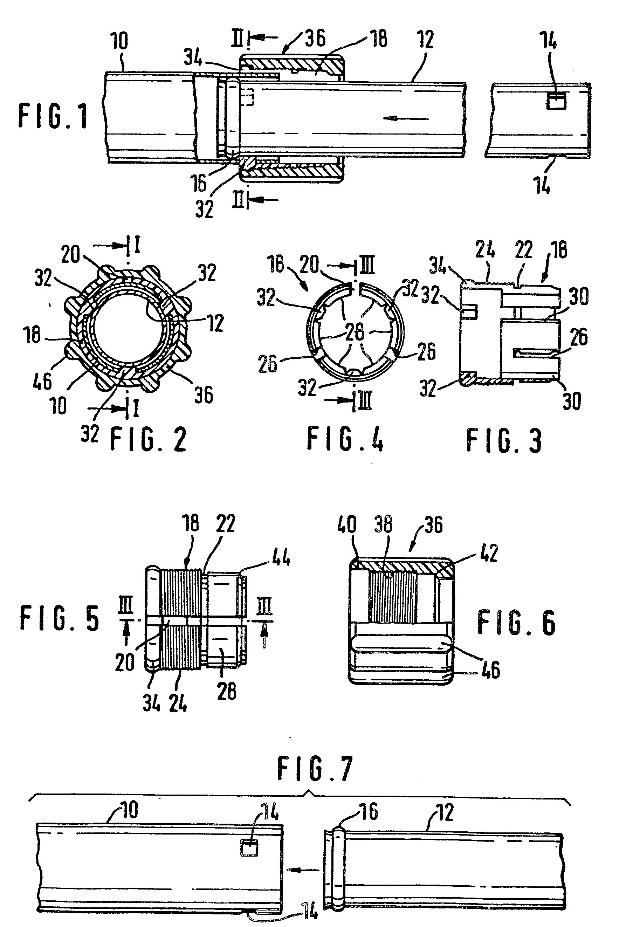

Die in der Zeichnung veranschaulichte, teleskopisch verstellbare Stütze, beispielsweise ein Teleskopbein eines Kamerastativs, weist in der Regel mehrere ineinander schiebbare Rohre auf, von denen in der Zeichnung nur zwei in der erfindungsgemässen Weise miteinander verbundene Rohre dargestellt sind. Das jeweilige Aussenrohr 10 weist an seinem aufschubseitigen, über das jeweilige Innenrohr 12 greifende Ende in Umfangsrichtung angeordnete auf Abstand vom Rohrende befindliche Aussparungen 14 auf, wie dies insbesondere in Fig. 7 gezeigt ist. Das Innenrohr 12 weist an seinem einschubseitigen, in das Aussenrohr 10 einschiebbaren Ende eine Ringschulter 16 auf. An dem der Ringschulter 16 entgegengesetzten Ende des Innenrohres 12 sind wiederum Aussparungen 14 vorgesehen, wenn sich ein weiteres Innenrohr anschliessen soll, wobei dann das Rohr 12 für das anschliessende Innenrohr das Aussenrohr bildet. Eine einstückige Verriegelungshülse 18 weist einen in axialer Richtung durchgehenden Schlitz 20 auf, wie dies beispielsweise aus Fig. 4 hervorgeht. Die Verriegelungshülse 18 ist durch eine Ringnut 22 in zwei Abschnitte unterteilt, von denen der eine Abschnitt ein Aussengewinde 24 und der andere Abschnitt durch zwei weitere Längsschlitze 26 (siehe Fig. 3 und 4), die sich bis etwa zur Ringschulter 22 hin erstrecken, in drei Spannbacken 28 unterteilt ist. Die drei Spannbacken 28, die jeweils zwischen den Schlitzen 20, 26 liegen, können durch eine innenseitige Nut 30 (siehe Fig. 3) nochmals unterteilt sein. Dadurch wird eine hohe Flexibilität der durch die Spannbacken 28 gebildeten Klemmeinrichtung in radialer Richtung gewährleistet. Wie aus den Fig. 1 und 3 hervorgeht, ist der Innenumfang der Verriegelungshülse 18 abgestuft, und zwar weist der dem Aussengewinde 24 zugeordnete Abschnitt der Verriegelungshülse 18 einen grösseren Innendurchmesser als der den Spannbacken 28 zugeordnete Abschnitt der Verriegelungshülse auf. Der grössere Innendurchmesser ist dem Aussendurchmesser des Aussenrohrs 10 angepasst, während der kleinere Innendurchmesser dem Aussendurchmesser des Innenrohrs 12 angepasst ist. Auf der Innenfläche des Abschnittes der Verriegelungshülse mit dem grösseren Innendurchmesser sind Vorsprünge 32 für einen Durchtritt durch die gleichmässig um den Umfang verteilten Aussparungen 14 im Aussenrohr 10 vorgesehen, wie in den Fig. 1 und 2 veranschaulicht. Die radiale Länge der Vorsprünge 32 ist dabei geringfügig grösser als der radiale Abstand zwischen den Aussenflächen des Aussenrohres 10 und des in das Aussenrohr 10 eingeschobenen Innenrohrs 12. Ferner ist an dem den Spannbacken 28 abgewandten Ende des Aussengewindes 24 der Verriegelungshülse 18 ein in radialer Richtung deckungsgleich mit den Vorsprüngen 32 verlaufender aussenseitiger Ringwulst 34 vorgesehen, der sich geringfügig über das Aussengewinde 24 erhebt.

Eine über die Verriegelungshülse 18 aufschraubbare Mutter 36, deren Länge in etwa der Verriegelungshülse 18 entspricht, weist ein mit dem Aussengewinde 24 der Verriegelungshülse zusammenwirkendes Innengewinde 38 auf, an dessen einem Ende sich eine ringförmige Schrägfläche 40 für ein Zusammenwirken mit dem Ringwulst 34 der Verriegelungshülse und an dessen anderem Ende sich eine ringförmige abgestufte Schrägfläche 42 für ein Zusammenwirken mit der abgestuften Schrägfläche 44 der Spannbacken 28 anschliesst. Aussenseitig ist die Mutter 36 mit Längsrippen 46 versehen, die beim manuellen Aufschrauben der Mutter auf die Verriegelungshülse 18 einen sicheren Griff gewährleisten sollen.

Die Rohre 10 und 12 bestehen aus Metall und haben eine Wandstärke von ca. 0,7 mm. Die Verriegelungshülse 18 und die Mutter 36 hingegen bestehen aus Kunststoff.

Beim Zusammenbau wird zuerst das Innenrohr 12 mit der Ringschulter 16 in das die Aussparungen 14 aufweisende Ende des Aussenrohres 10 geschoben, worauf die Verriegelungshülse 18, die aufgrund des durchgehenden Schlitzes 20 ohne weiteres aufgeweitet werden kann, über das Innenrohr hinweg auf das Aussenrohr mit den in Vorschubrichtung weisenden Vorsprüngen 32 aufgeschoben wird, bis die Vorsprünge 32 durch die Aussparungen 14 im Aussenrohr 10 hindurchgreifen. Die Ringschulter 16 des Innenrohrs 12 liegt dabei in Auszugsrichtung des Innenrohrs vor den Vorsprüngen 32, so dass ein unbeabsichtigtes vollständiges Herausziehen des Innenrohres 12 aus dem Aussenrohr 10 nunmehr verhindert wird. Danach wird die Mutter 36 über das Innenrohr 12 hinweg auf die Verriegelungshülse 18 aufgeschraubt. Die Mutter 36 kann nun in jeder beliebig weit in das Aussenrohr 10 eingeschobenen Stellung des Innenrohrs 12 festgezogen werden, wobei die ringförmige abgestufte Schrägfläche 42 der Mutter 36 in Zusammenwirkung mit der ringförmigen abgestuften Schrägfläche 44 der Spannbacken 28 die Spannbacken 28 gegen die Aussenwandung des Innenrohrs 12 presst und die ringförmige Schrägfläche 40 der Mutter 38 in Zusammenwirkung mit dem Ringwulst 34 der Verriegelungshülse 18 die Vorsprünge 32 ebenfalls gegen die Aussenwandung des Innenrohrs 12 drückt. Auf diese Weise wird das Innenrohr an zwei möglichst weit voneinander beabstandeten Stellen fixiert, so dass ein verwacklungsfreier und sicherer Halt des Innenrohres 12 am Aussenrohr 10 gewährleistet ist.

Es wird ausdrücklich darauf hingewiesen, dass zum Festspannen des Innenrohres kein axialer Eingriff zwischen dem Aussen- und dem Innenrohr erforderlich ist, so dass auf eine axiale Spannbewegung verzichtet werden kann und in einer zu der in der Zeichnung veranschaulichten alternativen Ausführungsform die Mutter 36 bei gleichzeitiger Weglassung des Aussengewindes 24 und des Ringwulstes 34 der Verriegelungshülse durch eine Knebelspanneinrichtung ersetzt werden kann, die nur in radialer Richtung wirksam ist. Da dann eine Schraubbewegung entfällt, können im Prinzip auch unrunde Profile mit der einstückigen Verriegelungshülse festgelegt werden.

## Patentansprüche

1. Teleskopisch verstellbare Stütze, insbesondere für ein Kamerastativ, mit mindestens zwei ineinander schiebbaren Rohren (10, 12), von denen das Aussenrohr (10) an seinem aufschubseitigen, über das Innenrohr (12) greifenden Ende in Umfangsrichtung angeordnete Aussparungen (14) aufweist, einer am aufschubseitigen Ende des Aussenrohrs (10) angeordneten, sich über die Eingriffsstelle zwischen dem Innen- (12) und dem Aussenrohr (10) $F_1$, das Aussenrohr (10) und das Innenrohr (12) umgebenden, hinweg erstreckenden in axialer Richtung geteilten elastischen Verriegelung (36, 18), die durch die Aussparungen (14) im aufschubseitigen Ende des Aussenrohrs hindurchgreifende Vorsprünge (32) sowie eine ausserhalb des Aussenrohrs am Innenrohr angreifende Klemmeinrichtung (28) aufweist, und mit einer mit der Verriegelungseinrichtung (18) zusammenwirkenden, deren Klemmeinrichtung (28) beaufschlagenden Feststelleinrichtung, dadurch gekennzeichnet, dass die Verriegelungseinrichtung aus einer einzigen einstückigen Verriegelungshülse (18) besteht, die die durch die Aussparungen (14) im Aussenrohr (10) hindurchgreifenden Vorsprünge (32) sowie die Klemmeinrichtung (28) aufweist, und dass für ein zusätzliches Festklemmen des Innenrohres (12) mit Hilfe der Vorsprünge (32) die radiale Länge der durch die Aussparungen (14) im Aussenrohr (12) greifenden Vorsprünge (32) der Hülse (18) grösser als der radiale Abstand zwischen den Aussenflächen des Innen- und des Aussenrohrs (10, 12) ist, wobei zwischen der Klemmeinrichtung (28) und den Vorsprüngen der Verriegelungshülse (18) eine verklemmungsfreie Zone liegt.

2. Stütze nach Anspruch 1, dadurch gekennzeichnet, dass die Klemmeinrichtung der Verriegelungshülse aus einer Vielzahl von Spannbacken (28) besteht, die durch an mehreren Stellen in axialer Richtung in dem das Innenrohr (12) ausserhalb des Aussenrohrs (10) umgreifenden Abschnitt der Verriegelungshülse (18) verlaufende Schlitze (26) gebildet sind.

3. Stütze nach Anspruch 1 oder 2, dadurch gekennzeichnet, dass die Feststelleinrichtung eine Knebelspanneinrichtung ist.

4. Stütze nach Anspruch 1 oder 2, bei der der die Vorsprünge aufweisende, das Aussenrohr umschliessende Teil der Verriegelungseinrichtung mit einem Aussengewinde versehen ist und die Feststelleinrichtung als Mutter ausgebildet ist, die auf das Aussengewinde aufschraubbar ist und über Schrägflächen mit der am Innenrohr ausserhalb des Aussenrohres angreifenden Klemmeinrichtung zusammenwirkt, dadurch gekennzeichnet, dass die Verriegelungshülse (18) an dem der Klemmeinrichtung (28) abgewandten Ende des Aussengewindes (24) mit der Mutter (36) über eine Schrägflächenanordnung (34, 40) zum Anpressen der Vorsprünge (33) an das Innenrohr (12) zusammenwirkt.

5. Stütze nach Anspruch 4, dadurch gekennzeichnet, dass an dem der Klemmeinrichtung (28) abgewandten Ende des Aussengewindes (24) der Verriegelungshülse (18) ein Ringwulst (34) vorgesehen ist.

6. Stütze nach einem der vorhergehenden Ansprüche, dadurch gekennzeichnet, dass zwischen der Klemmeinrichtung (28) und dem auf dem Aussenrohr zu liegen kommenden Abschnitt der Verriegelungshülse (18) eine Ringnut (22) vorgesehen ist.

7. Stütze nach einem der Ansprüche 2 bis 6, dadurch gekennzeichnet, dass die Spannbacken (28) auf der Innenseite Längsnuten (30) aufweisen.

## Claims

1. Telescopically adjustable support, especially for a camera stand, with two or more tubes (10, 12), which can be pushed one into another, and of which the outer tube (10) possesses holes (14) at its end which is pushed onto and engages over the inner tube (12), these holes being arranged circumferentially, with a resilient latch (36, 18), which is split axially and is located at that end of the outer tube (10) which is pushed on, extending beyond the position at which the inner tube (12) engages with the outer tube (10) (Fig. 1), and surrounding the outer tube (10) and the inner tube (12) (Fig. 1), and possessing projections (32) which extend through the holes (14) in that end of the outer tube which is pushed on, and possessing a clamping device (28) which engages on the inner tube, beyond the outer tube, and with a locking device, which interacts with the latching device (18) and stresses the clamping device (28) of the latching device, characterised in that the latching device consists of a single one-piece latching sleeve (18), which possesses the projections (32) which extend through the holes (14) in the outer tube (10) as well as the clamping device (28), and in that, for additional clamping of the inner tube (12) by means of the projections (32), the radial length of the projections (32) of the sleeve (18), which extend through the holes (14) in the outer tube (12), is greater than the radial distance between the outer surfaces of the inner and outer tubes (10, 12), a zone in which no clamping takes place being located between the clamping device (28) and the projections of the latching sleeve (18).

2. Support according to Claim 1, characterised in that the clamping device of the latching sleeve consists of a plurality of clamping jaws (28), which are formed by slots (26) in that portion of the latching sleeve (18) which engages around the inner tube (12), beyond the outer tube (10), these slots running in the axial direction at several points.

3. Support according to Claim 1 or 2, characterised in that the locking device is a toggle-type clamping device.

4. Support according to Claim 1 or 2, in which that portion of the latching device which possesses the projections and surrounds the outer tube, is provided with an external thread, and the locking device is designed in the form of a nut, which can be screwed onto the external thread and which interacts, via inclined surfaces, with the clamping device which engages on the inner tube beyond the outer tube, characterised in that the latching sleeve (18) interacts with the nut (36), via an arrangement of inclined surfaces (34, 40), at that end of the external thread (24) which faces away from the clamping device (28), in order to press the projections (33) against the inner tube (12).

5. Support according to Claim 4, characterised in that an annular bead (34) is provided at that end of the external thread (24) of the latching sleeve (18) which faces away from the clamping device (28).

6. Support according to one of the preceding Claims, characterised in that an annular groove (22) is provided between the clamping device (28) and that section of the latching sleeve (18) which comes to rest on the outer tube.

7. Support according to one of Claims 2 to 6, characterised in that the clamping jaws (28) possess longitudinal grooves (30), on the inside.

**Revendications**

1. Pied télescopique réglable, en particulier pour un support d'appareil photographique, comportant au moins deux tubes (10, 12) pouvant coulisser l'un dans l'autre et dont le tube externe (10) présente, à son extrémité qui vient s'enfiler sur le tube interne (12), des évidements (14) disposés en direction périphérique; comportant aussi un verrouillage (36, 18), divisé élastiquement dans la direction axiale, disposé à l'extrémité du tube externe (10) qui vient s'enfiler sur le tube interne, s'étendant sur la longueur de la position de prise entre le tube interne (12) et le tube externe (10), entourant le tube interne (12) et présentant des saillies (32) qui viennent se loger dans les évidements (14) situés à l'extrémité du tube externe qui s'enfile sur le tube interne, ainsi qu'un dispositif de bridage (28) qui attaque le tube interne à l'extérieur du tube externe; et comportant aussi un dispositif de blocage qui collabore avec le dispositif de verrouillage (18) et agit sur son dispositif de bridage (28); caractérisé en ce que le dispositif de verrouillage est constitué d'une douille de verrouillage unique et d'une seule pièce (18), présentant les saillies (32) qui viennent se loger dans les évidements (14) du tube externe (10), ainsi que le dispositif de bridage (28); et en ce que, pour assurer un blocage supplémentaire du tube interne (12) à l'aide des saillies (32), la longueur radiale des saillies (32) de la douille (18) qui se logent dans les évidements (14) du tube externe (12) est supérieure à la distance radiale entre les surfaces externes du tube interne et du tube externe (10, 12), une zone non bridée existante alors entre le dispositif de bridage (28) et les saillies de la douille de verrouillage (18).

2. Pied selon la revendication 1, caractérisé en ce que le dispositif de bridage de la douille de verrouillage est constitué d'un certain nombre de mors (28) formés par des fentes (26) qui courent, en plusieurs endroits et en direction axiale, dans la partie de la douille de verrouillage (18) qui enserre le tube interne (12) à l'extérieur du tube externe (10).

3. Pied selon la revendication 1 ou la revendication 2, caractérisé en ce que le dispositif de blocage est un dispositif de serrage à levier.

4. Pied selon la revendication 1 ou la revendication 2, dans lequel la partie du dispositif de verrouillage qui présente les saillies et qui enserre le tube externe est munie d'un filetage externe et dans lequel le dispositif de blocage est conçu sous forme d'un écrou qui peut se visser sur le filetage externe et qui collabore, par l'intermédiaire de surfaces obliques, avec le dispositif de bridage qui attaque le tube interne à l'extérieur du tube externe, caractérisé en ce que la douille de verrouillage (18), à l'extrémité du filetage externe (24) côté opposé au dispositif de bridage (28), collabore avec l'écrou (36), par l'intermédiaire d'un dispositif à surface oblique (34, 40) pour comprimer les saillies (33) contre le tube interne (12).

5. Pied selon la revendication 4, caractérisé en ce qu'à l'extrémité du filetage externe (24) de la douille de verrouillage (18), côté opposé au dispositif de bridage (28), est prévu un bourrelet annulaire (34).

6. Pied selon l'une des revendications précédentes, caractérisé en ce qu'entre le dispositif de bridage (28) et la partie de la douille de verrouillage (18) qui vient reposer sur le tube externe est prévue une rainure annulaire (22).

7. Pied selon l'une des revendications 2 à 6, caractérisé en ce que les mors (28) présentent sur leur face interne des rainures longitudinales (30).

FIG.1

FIG.2

FIG.4

FIG.3

FIG.5

FIG.6

FIG.7